# EUROPÄISCHE PATENTSCHRIFT

(11) **EP 3 891 851 B1**
(45) Veröffentlichungstag und Bekanntmachung des Hinweises auf die Patenterteilung: **03.01.2024**
(21) Anmeldenummer: 19812986.8
(22) Anmeldetag: 28.11.2019
(51) Int. Cl.: H01R 13/00, B60L 53/16

(54) **ANSCHLUSSELEMENT ZUM ELEKTRISCHEN ANSCHLIESSEN EINER FLUIDKÜHLBAREN EINZELLEITUNG, FLUIDKÜHLBARE EINZELLEITUNGSEINHEIT UND LADEKABEL**
CONNECTION ELEMENT FOR ELECTRICALLY CONNECTING A FLUID-COOLABLE INDIVIDUAL LINE, FLUID-COOLABLE INDIVIDUAL LINE UNIT, AND CHARGING CABLE
ÉLÉMENT DE RACCORDEMENT POUR LA CONNEXION ÉLECTRIQUE D'UNE LIGNE UNIQUE REFROIDIE PAR FLUIDE, UNITÉ DE LIGNE UNIQUE REFROIDIE PAR FLUIDE, ET CÂBLE DE CHARGE

(30) Priorität: 05.12.2018 CH 14972018
(43) Veröffentlichungstag der Anmeldung: 13.10.2021
(73) Patentinhaber: BRUGG eConnect AG, 5200 Brugg AG (CH)
(72) Erfinder: KEMPF, Urs, 6472 Erstfeld (CH); SEKULA, Oldrich, 8454 Buchberg (CH); MARTINEZ VALL, Albert, 5400 Baden (CH)
(74) Vertreter: Daub, Thomas
(86) Internationale Anmeldenummer: PCT/EP2019/082997
(87) Internationale Veröffentlichungsnummer: WO 2020/114888

(56) Entgegenhaltungen:
- WO-A1-2017/162494
- DE-A1-102016 112 306
- US-A- 3 244 792

## Beschreibung

### Technisches Gebiet

Die Erfindung betrifft ein Anschlusselement zum elektrischen Anschliessen einer Einzelleitung, welche eine konzentrische Leiteranordnung und einen zentralen Kanal für ein Kühlfluid aufweist. Die Erfindung betrifft ferner eine fluidkühlbare Einzelleitungseinheit für ein Ladekabel, ein Ladekabel mit einem Steckverbinder, sowie ein Verfahren zur Herstellung einer fluidkühlbaren Einzelleitungseinheit.

### Stand der Technik

Das Aufladen von elektrisch betriebenen Fahrzeugen benötigt heute im Vergleich zum Betanken von Fahrzeugen mit Verbrennungsmotoren noch ein Vielfaches der Zeit. Während Verbrennungsmotoren in wenigen Minuten betankt werden können, beträgt die Ladezeit zum Vollaufladen eines Elektrofahrzeugs an den heute verbreiteten öffentlichen Schnellladestationen an Stromtankstellen noch deutlich mehr als 30 Minuten. Beispielsweise beträgt die Ladezeit eines Tesla S 70 Modells mit einer Batteriekapazität von 70 kWh an einer Gleichstrom-Schnellladestation mit einer Ladeleistung von 135 kWh etwa 0.6 h. Es sind jedoch erste 350 kW Ladestationen in Betrieb, die bei etwa 500 V Ströme bis zu 700 A übertragen. Sie ermöglichen das Beladen von Batterien mit einer Kapazität von 60 kWh in etwa 10 min. Damit das Ladekabel jedoch solche grossen Ströme übertragen kann, es jedoch auch ein Mensch gut greifen kann, ist es ab ca. 200 A Gleichstrom notwendig, das Kabel aktiv zu kühlen. Anderenfalls würde entweder die zulässige Oberflächentemperatur überschritten, oder es müsste ein derart grosser Leitungsdurchmesser verwendet werden, dass es von einem Menschen kaum noch vernünftig zu greifen wäre. Ausserdem wäre das Kabel aufgrund eines zu hohen Gewichts nicht mehr vernünftig handhabbar. Solche Probleme bestehen nicht nur bei elektrisch angetriebenen Automobilen, sondern bei sämtlichen Fortbewegungs- bzw. Transportmitteln, die elektrische Energie aus einem elektrischen Energiespeicher mit einer hohen Kapazität beziehen und die regelmässig über ein externes elektrisches Ladesystem aufgeladen werden müssen. Darunter fallen beispielsweise auch elektrisch betriebene Nutzfahrzeuge, Luftfahrzeuge sowie Wasserfahrzeuge.

Interne Versuche haben gezeigt, dass sich insbesondere Kabel eignen, welche in sich gekühlte Einzelleitungen mit jeweils zentralen I<ühlkanälen aufweisen. Eine solche Einzelleitung umfasst eine konzentrische Leiteranordnung die den zentralen Kanal umhüllt, eine Isolierung, die die Leiteranordnung unmittelbar umhüllt und für das Kühlfluid undurchdringbar und elektrisch isolierend ist. Es ist dabei besonders vorteilhaft, wenn die Leiteranordnung für das Kühlfluid durchdringbar ist, wodurch die Leiteranordnung direkt gekühlt wird und somit die in der Leiteranordnung entstehende Wärme durch die ohmschen Verluste über das Kühlfluid im Kanal abgeführt werden kann. Zudem ist es für die Stabilität der Einzelleitung vorteilhaft, wenn eine offene Stützstruktur mit einer Längsausdehnung im Kanal angeordnet ist, die von der Leiteranordnung entlang der Längsausdehnung unmittelbar umhüllt wird.

Der elektrische Anschluss solcher Kabel bzw. der Einzelleitungen ist sowohl auf der Steckerseite als auch auf der Ladestation Seite jedoch schwierig und aufwendig. Insbesondere besteht die Gefahr, den zentralen Kühlkanal beim Verbinden der Einzelleitungen mit dem Stecker als auch mit der Ladestation zu beschädigen.

Die WO 2017/162494 A1 offenbart ein Anschlusselement gemäß dem Oberbegriff des Anspruchs 1.

Die DE 10 2016 1 17 261 A1 (Harting Automotive GmbH) beschreibt eine Anschlusseinheit zum Anschliessen eines fluidgekühlten, elektrischen Kabels, welches im Querschnitt eine zentrale I<ühlflüssigkeitsleitung aufweist. Insbesondere handelt es sich dabei um ein Ladekabel für Elektroautos. Um die zentrale I<ühlflüssigkeitsleitung sind einzelne Kupferadern positioniert, die von einer flüssigkeitsdichten Folie umschlossen werden. Auf dieser Folie liegen hohle Pufferelemente auf, die von einem festen Kabelmantel umgeben sind. Die DE 10 2016 117 261 A1 offenbart ein erstes Anschlusselement, welches zum Anschluss eines Kontaktpins eines Autoladesteckverbinders an ein solches Kabel vorgesehen ist. Bei dem zylindrischen Anschlusselement steht ein sich nach vorne verjüngender Hohlzylinder in Form einer Hohlnadel ab. Die Austrittsöffnung des Hohlzylinders wird in die Flüssigkeitsleitung geschoben, so dass zwischen der zentralen Flüssigkeitsleitung und den seitlichen Öffnungen im Hauptzylinder eine Fluidverbindung besteht. Die DE 10 2016 117 261 beschreibt ferner ein zweites Anschlusselement, welches zum Anschliessen des Kabels an eine Ladestation vorgesehen ist. Dieses umfasst ein I<ontaktelement mit ebenfalls einem Hohlzylinder, welcher in die Flüssigkeitsleitung des Kabels eingeschoben wird. Die Flüssigkeit im Hohlzylinder wird im I<ontaktelement nach aussen in einen Fluidstutzen weitergeführt. Über diesen kann das im Ladesteckverbinder erwärmte Fluid nach aussen abgeführt werden. Für den elektrischen Kontakt wird eine zusätzliche Crimphülse benötigt. Das I<ontaktelement ist dabei innerhalb eines Gehäuses mit dem elektrischen Kabel verbunden.

Ein Ladekabel muss nicht nur sehr hohe Ströme übertragen, sondern es muss auch sehr robust sein, da es bei jeden Ladevorgang bewegt wird. Zudem ist es beim Einstecken des Ladesteckverbinders in das Automobil wie auch beim Ausstecken einer zusätzlichen mechanischen Belastung ausgesetzt. Schliesslich muss das Ladekabel auch Stürze bei unsachgemässer Behandlung aushalten können. Gleichzeitig muss das Ladekabel auf Grund der hohen zu übertragenden Ströme einen sichere elektrische Verbindung und eine hohe Durchflussrate des Kühlfluids gewährleisten. Schliesslich ist es erforderlich, dass der Anschluss der Kabel kostengünstig und einfach herzustellen ist. Der Stand der Technik löst die Aufgabe nur beschränkt. Die DE 10 2016 117 261 benötigt für das Herstellen der elektrischen Verbindung eine zusätzliche Crimphülse.

### Darstellung der Erfindung

Aufgabe der Erfindung ist es, ein dem eingangs genannten technischen Gebiet zugehörendes Anschlusselement zu schaffen, welches eine mechanisch robuste, und gleichzeitig kostengünstige Verbindung mit einem fluidgekühlten Leiter ermöglicht, welcher einen zentralen Fluidkanal aufweist, der von einem konzentrischen Leiter umgeben ist.

Neben all diesen Anforderungen muss das Anschlusselement ermöglichen, dass das Ladekabel zuverlässig hohe Ströme übertragen kann. Insbesondere werden bei DC-Gleichstromladestationen Ströme von über 700 A angestrebt.

Die Lösung der Aufgabe ist durch die Merkmale des Anspruchs 1 definiert. Gemäss der Erfindung umfasst das Anschlusselement zum elektrischen Anschliessen einer Einzelleitung, welche eine konzentrische Leiteranordnung und einen zentralen Kanal für ein Kühlfluid aufweist, ein elektrisch leitfähiges Gehäuse mit einem hülsenförmigen Pressabschnitt, der sich zur Herstellung einer Pressverbindung mit der konzentrischen Leiteranordnung eignet. Dabei weist das elektrisch leitfähige Gehäuse einen internen Kühlkanal mit einer Anschlussöffnung für eine externe Kühlleitung auf, welcher in einen vom hülsenförmigen Pressabschnitt umschlossenen Raum mündet. Zudem umfasst das Anschlusselement ein Gegendruckelement, das mindestens teilweise im vom hülsenförmigen Pressabschnitt umschlossenen Raum liegen kann. Das Gegendruckelement ist ferner dazu konfiguriert, die konzentrische Leiteranordnung auf ihrer Innenseite abzustützen, wenn der hülsenförmige Pressabschnitt beim Herstellen einer Pressverbindung komprimiert wird. Es ist dabei so ausgelegt, dass es im verpressten Zustand fluiddurchlässig ist, um eine Fluidverbindung durch das Gegendruckelement zu gewährleisten.

Das Anschlusselement ermöglicht es, eine sehr stabile Pressverbindung mit der Leiteranordnung des Kabels einzugehen, welche zudem grossflächig ist, da der Kontakt am Aussenumfang der Leiteranordnung sichergestellt wird. Aufgrund des Gegendruckelements können sehr hohe Flächenpressungen für die Herstellung des Presskontakts erzeugt werden, wobei gleichzeitig keine Gefahr besteht, den zentralen Kühlkanal zu verschliessen, da das Gegendruckelement so ausgebildet ist, dass es bei dem vorgesehen Druck fluiddurchlässig bleibt. Da die Presshülse gleichzeitig Bestandteil des Gehäuses des Anschlusselements ist, entfällt zudem nicht nur eine weitere elektrische Schnittstelle, sondern auch eine thermische. Damit ist ein guter thermischer Übergang zwischen der Presshülse und dem internen Kühlkanal gewährleistet. Deshalb wird auch die Presshülse gut gekühlt. Da die Presshülse Bestandteil des Gehäuses ist, ermöglicht das Anschlusselement eine mechanisch robuste Verbindung zwischen der Einzelleitung und dem Anschlusselement.

Eine Pressverbindung ist eine Verbindung zweier Teile, die sich die Reibung zwischen diesen beiden Teilen zu Nutze macht. Durch das Verpressen kann jedoch auch eine kombinierte reib- und formschlüssige Verbindung entstehen. Der Formschluss kann dabei ähnlich wie beim Crimpen durch eine Verformung mindestens eines der verpressten Teile erreicht werden. Beispielsweise kann ein Teil eine Struktur aufweisen, welches sich beim Pressvorgang in das andere Teil einprägt. Im Rahmen dieser Erfindung wird unter einer Pressverbindung daher auch eine kombinierte reib- und formschlüssige Verbindung verstanden.

Eine konzentrische Leiteranordnung im Sinne dieser Anmeldung umfasst ein Leitergeflecht und/oder einzelne Leiter, die um einen Kanal herum angeordnet sind und miteinander in elektrischen Kontakt stehen. Besonders gut eignet sich eine konzentrische Leiteranordnung, dessen innere Schicht durch ein Leitergeflecht gebildet wird. Ein solches Leitergeflecht kann bereits aus sich heraus einen Kanal bilden. Allerdings verändert sich der Innendurchmesser eines solchen, durch ein Leitergeflecht gebildeten Hohlzylinders wenn er entlang seiner Längsachse gestreckt oder gestaucht wird. Um zu verhindern, dass das Leitergeflecht einen Kanal mit wechselnden und unter Umständen auch sehr kleinen Innendurchmessern bildet und gleichzeitig die Flexibilität des Kabels zu gewährleisten, wird vorteilhafterweise eine offene Stützstruktur im zentralen Kanal angeordnet. Somit kann eine zuverlässige Kühlung erreicht werden. Die Stützstruktur sorgt dafür, dass der Innendurchmesser stets einen bestimmten Minimalwert hat. Ein Leitergeflecht, ist ein Produkt, welches durch regelmässiges unter- und überkreuzen der Leiter erzeugt wird. Die Leiter können sich dabei in einem Winkel von 90° oder in einem anderen Winkel kreuzen. Das Geflecht kann eine ebene Fläche oder Matte bilden, sich also in zwei Dimensionen beliebig weit ausdehnen, oder in einer zylinderähnliche Form vorliegen, die sich nur in einer Dimension beliebig weit ausdehnt und in den anderen beiden Raumdimensionen beschränkt ist. Bevorzugt kreuzen sich die Leiter in einem Winkel ungleich 90° und das Geflecht bildet eine zylinderähnliche Form.

Eine offene Stützstruktur ist eine längliche Struktur deren konvexe Hülle die Form eines Zylinders hat, wobei entlang und im Inneren der konvexen Hülle mindestens ein durchgehender Kanal, also ein Kanal der nicht von der Struktur unterbrochen wird, verläuft.

Mit "unmittelbar umhüllen" wird hier und im Folgenden insbesondere gemeint, dass keine weiteren Schichten oder Strukturen zwischen dem Umhüllten und dem Umhüllenden vorgesehen sind. Dabei sollen Hohlräume und/oder Kühlfluid nicht als Schicht oder Struktur angesehen werden.

Mit "umhüllen" wird hier und im Folgenden insbesondere gemeint, dass es durchaus weitere Schichten oder Strukturen zwischen dem Umhüllten und dem Umhüllenden geben kann, diese aber nicht zwingend vorhanden sein müssen.

Elektrisch isolierend im Sinne dieser Erfindung ist insbesondere ein Werkstoff mit einem spezifischen Widerstand von mehr als 10⁵ S2m, bevorzugt von mehr als 10¹⁰ S2m. Die Erfindung kann insbesondere Ethylen-Propylen-Dien-I<autschuk (EPDM) und/oder thermoplastische Elastomere (TPE) als isolierende Materialien nutzen.

Ein Kühlfluid kann eine Flüssigkeit oder ein Gas sein. Besonders eignet sich Wasser aufgrund seiner hohen Wärmekapazität als I<ühlflüssigkeit. Es kann Zusatzstoffe wie Antikorrosionsmittel oder Frostschutzmittel enthalten.

Die Isolierung der Einzelleitungen ist bevorzugt etwas elastisch, so dass sie sich im Betrieb unter dem Druck des Kühlfluids leicht weiten kann. Unter dem Betriebsdruck des Kühlfluids beträgt dieses Aufweiten, gemessen am Aussenradius der Isolierung, insbesondere nicht mehr als 10% des Aussenradius, welcher gemessen wird, wenn kein Kühlfluid in der Einzelleitung vorhanden ist. Die Isolierung kann insbesondere aus EPDM oder TPE bestehen.

Die Isolierung der Einzelleitungen kann insbesondere faserverstärkt sein. Dazu können Fasern mit einem hohen E-modul und einer guten Temperaturbeständigkeit in die Isolierung eingebettet sein und/oder auf deren Aussenseite anliegen. Bevorzugt soll das E-modul der Fasern bei 20°C höher als 50 GPa sein und bis über 100°C temperaturbeständig sein. Beispiele für geeignete Fasern sind Aramidfasern, Hanffasern und Polyethylenfasern. Anders als bei üblichen elektrischen I<abeln ist die Isolierung der Einzelleitungen auch einem, möglicherweise hohen, Innendruck durch das Kühlfluid ausgesetzt. Die Faserverstärkung nimmt einen Teil dieses Innendrucks auf und erhöht so die Zuverlässigkeit der Isolierung.

Die Einzelleitung umfasst bevorzugt eine Stützstruktur mit einer Längsausdehnung, die im zentralen Kanal angeordnet ist.

Ein Ladekabel umfasst bevorzugt eine erste und eine zweite fluidkühlbare Einzelleitung sowie einen gemeinsamen Schutzmantel. In einer bevorzugten Ausführungsform umfasst das Ladekabel mindestens einen Schlauch aus einem fluiddichten Material, der von dem gemeinsamen Schutzmantel umgeben ist, wobei ein durch einen der zentralen Kanäle der beiden fluidkühlbaren Einzelleitungen geführtes Kühlfluid in die entgegengesetzte Richtung durch den mindestens einen Schlauch zurückgeführt werden kann. Besonders bevorzugt umfasst das Ladekabel zwei Schläuche aus einem fluiddichten Material, die von dem gemeinsamen Schutzmantel umgeben sind, wobei ein durch die zentralen Kanäle der beiden fluidkühlbaren Einzelleitungseinheiten geführtes Kühlfluid in die entgegengesetzte Richtung durch die zwei Schläuche zurückgeführt werden kann. Bevorzugt umfasst das Ladekabel ausserdem Signalleitungen. Bevorzugt umfasst das Ladekabel einen Erdleiter. Der Erdleiter kann als Leiter mit eigener Isolierung vom gemeinsamen Schutzmantel umgeben ausgebildet sein oder verteilt im Schutzmantel ausgebildet sein. Befindet er sich im Schutzmantel, so kann es sich um ein Leitergeflecht oder nebeneinander angeordnete Einzeldrähte oder dünne Litzen handeln. Mehrere Gruppen solcher nebeneinander angeordneten Einzeldrähte oder dünnen Litzen können durch Abschnitte von Schutzmantelmaterial voneinander getrennt sein, die keinerlei Leiter enthalten. Bevorzugt umfasst das Ladekabel beides: Einen Erdleiter mit eigener Isolierung, der vom gemeinsamen Schutzmantel umgeben ist und einen zweiten Erdleiter, der im Schutzmantel verteilt ausgebildet ist.

In einer bevorzugten Ausführungsform umfasst das Ladekabel zwei fluidkühlbare Einzelleitungen deren zentraler I<ühlfluidkanal jeweils mit einer Stützstruktur in der Form einer Drahtspirale abgestützt wird. Jede der Einzelleitungen ist von einer faserverstärkten Isolierung umgeben. Dieses Ladekabel umfasst ausserdem zwei Schläuche, einen ersten Erdleiter mit rundem Querschnitt, der von einer eigenen Isolierung umgeben ist und vier Gruppen von Signalkabeln, die jeweils drei Signalkabel umfassen, welche von einem gemeinsamen Signalkabel-Mantel umgeben sind. Die beiden Einzelleitungen, der erste Erdleiter, die zwei Schläuche und die vier Gruppen von Signalkabeln befinden sich innerhalb eines gemeinsamen Schutzmantels. Der Schutzmantel umfasst vier Gruppen von nebeneinander angeordneten Einzelleitern, die durch Abschnitte aus Mantelmaterial ohne eingebettete Einzelleiter voneinander getrennt sind. Die Einzelleiter im Schutzmantel wirken ebenfalls als Erdleiter. Diese bevorzugte Ausführungsform eines Ladekabels stellt einen besonders guten Kompromiss dar in Hinblick auf Überfahrfestigkeit, Flexibilität, Gewicht und Sicherheit.

In einer bevorzugten Ausführungsform weist das Gegendruckelement eine im Wesentlichen zylindrische Aussenkontur auf.

Eine solche Form ist besonders einfach herzustellen und kann den konzentrischen Leiter, welcher in den meisten Fällen auf seiner Innenseite einen kreisförmigen Querschnitt hat, auch gleichmässig mit seiner zylindrischen Aussenkontur über den gesamten Umfang abstützen. Bei elliptischen Querschnitten ist eine elliptische Aussenkontur des Gegendruckelements bevorzugt. Es können jedoch auch Gegendruckelemente mit einer offenen Aussenkontur verwendet werden. Solche Gegendruckelemente können einerseits eine konvexe Hülle in Form eines Zylinders oder auch einer Ellipse haben. Beispiele für solche Formen sind beispielsweise Schraubenfedern. Andererseits können solche Gegendruckelemente mit offenen Aussenkonturen auch kreuz- oder sternförmige Querschnittsprofile aufweisen. Bei letzteren ist die konvexe Hülle ein Zylinder mit einem Rechteck oder einem Polygon als Grundfläche.

In einer Ausführungsform ist das Gegendruckelement hohlzylindrisch und die Fluidverbindung wird durch eine zentrale Durchgangsöffnung gewährleistet. Diese Form ist nicht nur besonders einfach herzustellen, sondern weist auch eine gute Stabilität auf. Zudem ermöglicht es die zentrale Anordnung eine gute Durchflussrate bei einem geringen Druckabfall zu erzielen. Die Durchgangsöffnung lässt sich durch eine Durchgangsbohrung einfach realisieren. Vorzugsweise ist der Innendurchmesser der zentralen Öffnung grösser als 2 mm, 3 mm, 4 mm oder 5 mm. Das Gegendruckelement kann jedoch auch mehrere Durchgangsöffnungen umfassen.

In einer bevorzugten Ausführungsform ist das Gegendruckelement am Gehäuse angeordnet. Das Gegendruckelement kann beispielsweise mit dem Gehäuse verschraubt oder verschweisst sein. Diese Anordnung ermöglicht eine besonders einfache Montage, da der konzentrische Leiter vor dem Verpressen in die ringförmige Aussparung, welche durch den Zwischenraum zwischen dem Pressabschnitt und dem Gegendruckelement gebildet wird, hineingeschoben werden kann. Gleichzeitig wird die mechanische Festigkeit durch die zusätzliche Verbindung des Gegendruckelements mit dem Gehäuse verbessert. Sofern das Gegendruckelement aus einem elektrischen leitfähigen Material gefertigt ist, verringert das Gegendruckelement zudem den elektrischen Widerstand der elektrischen Verbindung zwischen der zu verbindenden Einzelleitung und dem Anschlusselement.

Das Gegendruckelement kann jedoch auch als separates Element hergestellt sein. In diesem Fall kann es zur Montage vor dem Verpressen in das Innere der Leiteranordnung bzw. in den zentralen Kanal der Einzelleitung eingeschoben werden, bevor die Pressverbindung hergestellt wird. Dadurch wird eine sehr einfach Ausgestaltung des Anschlusselements möglich, die sehr einfach zu fertigen ist. Zudem kann ein Material mit einer besonders hohen mechanischen Festigkeit verwendet werden. Dadurch lassen sich hohe Presskräfte realisieren und gleichzeitig kann die Fluiddurchlässigkeit in Richtung des zentralen I<anals auch bei kleineren Wandstärken aufrechterhalten werden. Dadurch lässt sich die zentrale Öffnung des Gegendruckelements mit einem grösseren Innendurchmesser realisieren und damit eine bessere Durchflussrate erzielen. Insbesondere eignen sich Stähle als Material für die Herstellung eines separaten Gegendruckelements. Je nach eingesetztem Kühlfluid bzw. den eingesetzten Antikorrosionsmittel ist eine Verwendung von rostfreien Stahllegierungen oder eine Beschichtung des Druckelements vorteilhaft.

Besonders bevorzugt ist das Gegendruckelement einstückig bzw. einteilig mit dem elektrisch leitfähigen Gehäuse ausgebildet. Einstückig heisst, dass das Gegendruckelement und das elektrisch leitfähige Gehäuse aus einem zusammenhängenden Stück gebildet sind. Dadurch werden die oben erwähnten Vorteile der einfachen Montage und des verringerten elektrischen Widerstands bzw. des verbesserten elektrischen Kontakts übernommen. Je nach verwendetem Material wird die mechanische Festigkeit verbessert.

In einer weiteren bevorzugten Ausführungsform ist das Gegendruckelement so dimensioniert, dass es beim Einführen eine im zentralen Kanal angeordnete Stützstruktur, welche von der Leiteranordnung entlang der Längsausdehnung unmittelbar umhüllt wird, mitverschieben kann.

Der Begriff Einführen wird im Rahmen dieser Anmeldung als Oberbegriff für die Begriffe Einschieben und Eindrehen verwendet. Während das Einschieben im Wesentlichen eine translatorische Relativbewegung zwischen zwei Körpern beschreibt, wird beim Eindrehen die translatorische Relativbewegung von einer relativen Drehbewegung überlagert, wobei die Drehbewegung um eine Achse erfolgt, welche durch die translatorische Verschiebungslinie definiert ist. Ein Beispiel einer solchen Bewegung ist das Eindrehen einer Schraube in ein Gewinde.

Es sind jedoch auch Ausführungsformen möglich, bei welchen das Gegendruckelement auf eine andere Weise im zentralen Kanal montiert ist, so dass die Leiteranordnung es mindestens teilweise umgibt. Beispielsweise kann das Leitergeflecht im Bereich des abisolierten Abschnitts aufgeflochten werden, um das Gegendruckelement zu montieren.

Sofern eine offene Stützstruktur im zentralen Kanal vorhanden ist, kann zumindest der dem Anschlusselement zugewandte Teil der Stützstruktur in Richtung des dem Anschlusselement abgewandten Kabelende verschoben werden, indem eine Kraft mittels des Gegendruckelements auf die Stützstruktur ausgeführt wird. Die Stützstruktur wird dabei je nach Ausführung in Längsrichtung komprimiert. Die Form des Gegendruckelements muss so ausgestaltet sein, dass sie diese Kraft auf die Stützstruktur ausüben kann. Insbesondere sollte die Stirnseite des Gegendruckelements so ausgestaltet sein, dass sie sich nicht zwischen der Stützstruktur und der Leiteranordnung verkeilt.

In einer bevorzugten Ausführungsform weist das Gegendruckelement an seiner Aussenhülle ein Profil auf, welches beim Herstellen der Pressverbindung eine formschlüssige Verbindung mit der Leiteranordnung ermöglicht.

Vorzugsweise weist das Profil Rippen auf, welche im Wesentlichen senkrecht zur Anschlussrichtung der Einzelleitung verlaufen. Bei einer hohlzylindrischen Form wird beispielsweise die Aussenhülle durch den Aussenmantel des Hohlzylinders gebildet. Durch das Profil wird ein verbesserter Formschluss zwischen dem Gegendruckelement und der Leiteranordnung erreicht, da sich das Profil in die Leiteranordnung und in der Innenmantelfläche der Presshülse einprägen kann. Die Struktur kann ein dem Fachmann bekanntes Rändel sein, insbesondere ein I<reisrändel oder ein I<reuzrändel. Ein Profil mit im Wesentlichen senkrechten Rippen kann beispielsweise auch die Struktur eines Schraubengewindes haben. Dadurch wird das Eindrehen des Gegendruckelements in den zentralen Kanal vereinfacht. Durch den senkrechten Verlauf der Rippen wird die I<raftübertragungsfähig der Pressverbindung in axiale Zugrichtung verbessert.

Bevorzugterweise ist das Gehäuse des Anschlusselements aus Kupfer oder einer kupferhaltigen Legierung hergestellt. Dadurch kann eine gute elektrische und thermische Leitfähigkeit erzielt werden. Kupfer- und kupferhaltige Legierungen eignen sich auch gut für das Verpressen. Es können jedoch auch andere Materialen wie beispielsweise Messing verwendet werden. Vorzugsweise ist das Anschlusselement auch beschichtet, insbesondere silber-, gold- oder nickelbeschichtet. Die Beschichtung kann auch eine galvanische Beschichtung sein.

In einer weiteren bevorzugten Ausführungsform umfasst das Anschlusselement einen Kontaktteil, wobei der Kontaktteil vorzugsweise eine weibliche Buchse aufweist, welche für die Verwendung in einem Ladesteckverbinder für ein Elektrofahrzeug geeignet ist. Der Ladesteckverbinder kann ein DC-, ein AC- oder ein kombinierter Ladesteckverbinder sein.

Bevorzugterweise ist er für die Verwendung in einem DC-Ladesteckverbinder, einen AC-Ladesteckverbinder und/oder einen kombinierten Ladesteckverbinder für ein Elektrofahrzeug geeignet.

Ein Elektrofahrzeug kann insbesondere ein elektrisch angetriebenes Automobil oder strassengebundenes Nutzfahrzeug sein. Es kann aber auch ein beliebiges Fortbewegungs- oder Transportmittel sein, welches die elektrische Energie aus einem elektrischen Energiespeicher bezieht und das insbesondere regelmässig über ein externes elektrisches Ladesystem aufgeladen werden muss. Es kann insbesondere ein Schienenfahrzeug, ein Luftfahrzeug oder ein Wasserfahrzeug sein.

Ein Kontaktteil stellt ein Steckerpin eines Ladesteckverbinders dar. Dieser kann als männlicher Pin ausgebildet sein oder als weibliche Buchse. Für nach IEC 62196-3 genormte Fahrzeuganschluss sind für die DC-Leitungen weibliche Buchsen vorgesehen.

Durch die interne Kühlleitung kann nicht nur das Anschlusselement, sondern auch der Kontaktteil gekühlt werden.

In einer bevorzugten Ausführungsform ist der Kontaktteil mit einer verschleissfesten, elektrisch gut leitfähigen Beschichtung beschichtet, wobei die Beschichtung insbesondere eine Silber-, Gold- oder Nickelplatinbeschichtung ist. Durch diese Beschichtungen wird ein sehr guter elektrischer Kontakt ermöglicht. Zudem verbessert die Beschichtung die I<orrosionsbeständigkeit des Kontaktteils. Unter gut leitfähig wird im Sinne dieser Anmeldung eine elektrische Leitfähigkeit von über 5·10⁶ S/m, insbesondere von über 15·10⁶S/m oder 25·10⁶S/m verstanden.

In einer bevorzugten Ausführungsform ist der leitende Kontaktteil mit dem Gehäuse des Anschlusselements lösbar verbunden.

Dies ermöglicht das leichte Auswechseln des I<ontaktteils, welcher einer besonders starken Beanspruchung ausgesetzt ist. Einerseits wird der Kontaktteil durch die Ein- und Aussteckvorgänge einer ständigen mechanischen Belastung und damit einem mechanischen Verschleiss ausgesetzt. Andererseits ist er Umwelteinflüssen ausgesetzt, da ein Steckergehäuse den Kontaktteil üblicherweise nicht komplett abdeckt.

Es wird dabei besonders bevorzugt, dass der leitende Kontaktteil über eine Schraubverbindung mit dem Gehäuse verbindbar ist, wobei vorzugsweise der Kontaktteil ein Innengewinde aufweist, das mit einem Aussengewinde des Kontaktteils verschraubt werden kann. Zusätzlich ist es vorteilhaft, wenn eine Schraubensicherung zwischen dem Gehäuse und dem Kontaktteil angeordnet ist. Eine solche Schraubensicherung kann einen Federring oder eine Federscheibe umfassen. Dem Fachmann sind solche Schraubensicherungen bekannt. Die Schraubenverbindung ermöglicht ein besonders einfaches Wechseln des Kontaktteils. Anstelle eines Aussengewindes am Kontaktteil kann der I<ontaktteil auch eine Durchgangsbohrung mit einem Innengewinde aufweisen. Eine Verschraubung ist dann mittels eines Gewindestift bzw. eines Gewindebolzens möglich.

In einer weiteren Ausführungsform mündet der interne Kühlkanal axial in den vom hülsenförmigen Pressabschnitt umschlossenen Raum, vorzugsweise zentrisch zur Innenmantelfläche des Pressabschnitts.

Weiterhin ist bevorzugt, dass die Anschlussöffnung senkrecht zu einer Anschlussrichtung der Einzelleitung angeordnet ist und vorzugsweise ein Innengewinde aufweist. Die Anschlussrichtung wird dabei durch die Ausrichtung des Presshülsenabschnitts bestimmt. Die senkrechte Anordnung ermöglicht es, auf einfache Weise in einem Steckverbinder eine Fluidverbindung zwischen nebeneinanderliegenden Einzelleitungen herzustellen. Damit kann erreicht werden, dass die in einem ersten Einzelleiter zugeführte I<ühlflüssigkeit in einem zweiten Einzelleiter zurückgeführt wird. Ebenso ist durch die senkrechte Anordnung ein Anschluss an einen separaten Kühlschlauch, über welchen die I<ühlflüssigkeit zurückgeführt werden soll, besonders einfach und platzsparend möglich.

In einer besonderen Ausführungsform weist das Anschlusselement zwei hülsenförmige oder mehr Pressabschnitte auf, die sich jeweils zur Herstellung einer Pressverbindung mit einer konzentrischen Leiteranordnung eignen und wobei der interne Kanal jeweils in den zwei oder mehreren hülsenförmigen Pressabschnitten mündet. In diesem Fall ist eine dieser zwei oder mehreren Öffnungen, in welcher der interne Kanal in den vom jeweiligen hülsenförmigen Pressabschnitt umschlossenen Raum mündet als Anschlussöffnung für eine externe Kühlleitung zu verstehen, die in diesem Fall von einer Einzelleitung bereitgestellt wird. Zusätzlich können jedoch auch eine weitere oder mehrere externe Anschlussöffnungen für den internen Kühlkanal vorgesehen werden.

Eine fluidkühlbare Einzelleitungseinheit für ein Ladekabel umfasst ein erstes erfinderisches Anschlusselement sowie eine Einzelleitung mit einem ersten und einem zweiten Ende. Die Einzelleitung umfasst dabei eine konzentrische Leiteranordnung und eine Isolierung, wobei mindestens ein zentraler Kanal für ein Kühlfluid vorhanden ist, der von der Leiteranordnung umhüllt wird und wobei die Isolierung die Leiteranordnung unmittelbar umhüllt und für das Kühlfluid undurchdringbar und elektrisch isolierend ist. Zudem weist die Einzelleitung an ihrem ersten Ende ein erstes abisoliertes Endstück auf, an welchem die Isolierung gegenüber der Leiteranordnung axial zurückversetzt ist, dabei steht die Innenmantelfläche des Pressabschnitts des ersten Anschlusselements mit der Leiteranordnung am abisolierten Endstück in einer radialen Pressverbindung, wodurch eine elektrische Verbindung zwischen dem Anschlusselement und der konzentrischen Leiteranordnung besteht. Ferner ist ein Gegendruckelement im zentralen Kanal angeordnet, so dass es mindestens teilweise im vom hülsenförmigen Pressabschnitt umschlossenen Raum liegt und die konzentrische Leiteranordnung auf ihrer Innenseite abstützt und dabei in einer Pressverbindung mit der konzentrischen Leiteranordnung steht. Dabei ermöglicht das Gegendruckelement eine Fluidverbindung durch den zentralen Kanal der Einzelleitung zwischen dem internen Kühlkanal des ersten Anschlusselements und dem zweiten Ende der Einzelleitung.

Das Gegendruckelement ermöglicht die Fluidverbindung durch seine Fluiddurchlässigkeit im verpressten Zustand, beispielsweise durch eine zentrale Öffnung.

Eine solche fluidkühlbare Einzelleitungseinheit weist die Vorteile auf, welche oben um Zusammenhang mit dem Anschlusselement diskutiert wurden. Sie ermöglicht die Kühlung der Leiteranordnung in der Einzelleitung, also direkt an dem Ort, an welchem Wärme durch ohmsche Verluste entsteht, ebenso wie die Kühlung des Anschlusselements.

Das Ladekabel kann dabei sowohl ein DC-Ladekabel, ein AC-Ladekabel oder auch ein kombiniertes DC und AC-Ladekabel sein.

In einer bevorzugten Ausführungsform der fluidkühlbaren Einzelleitungseinheit umfasst die Einzelleitung eine im zentralen Kanal angeordnete Stützstruktur mit einer Längsausdehnung, die von der Leiteranordnung entlang der Längsausdehnung unmittelbar umhüllt wird, wobei die Stützstruktur zwischen dem Gegendruckelement und dem zweiten Ende der Einzelleitung angeordnet ist.

In einer weiteren bevorzugten Ausführungsform ist die Leiteranordnung für das Kühlfluid im zentralen Kanal durchdringbar.

Das Leitergeflecht kann für das Kühlfluid durchdringbar sein, obwohl die Leiter selbst es nicht sind, da es in dem Geflecht Zwischenräume zwischen den Leitern gibt. Ein solches Geflecht mit Zwischenräumen, welches für das Kühlfluid durchdringbar ist, hat den Vorteil, dass sich die I<ontaktfläche zwischen Kühlfluid und Leitern deutlich erhöht und somit die Wärme effizient an das Kühlfluid abgegeben werden kann. Ausserdem ist ein Geflecht mit Zwischenräumen flexibler, was die Flexibilität der Einzelleitung als Ganzes erhöht.

In einer Ausführungsform umfasst die fluidkühlbare Einzelleitungseinheit ein Abdichtmittel, welches eine fluiddichte Verbindung zwischen dem hülsenförmigen Pressabschnitt und der Isolierung der Einzelleitung herstellt, wobei das Abdichtmittel vorzugsweise einen elastischen Schlauch umfasst, insbesondere einen Schrumpfschlauch. Das Abdichtmittel kann auch ein Klebeband, insbesondere ein Dichtungsklebeband und/oder Silikonmasse bzw. ein Silikonband umfassen.

Das Abdichtmittel kann zudem durch eine Bride am elektrisch leitfähigen Gehäuse und/oder eine Bride an der Isolation der Einzelleitung zusätzlich fixiert werden. Das Abdichtmittel kann auch ein elastisches Rohrelement umfassen, beispielsweise alternativ zu einem elastischen Schlauch.

Das Abdichtmittel verhindert das Entweichen des Kühlfluids. Daher muss die Leiteranordnung in sich selbst, gegebenenfalls auch nach dem Verpressen, nicht fluiddicht sein, was die Anforderungen an die Pressverbindung reduziert. Durch die Hülsenform des Pressschnitts, in welchen die Einzelleitung hineinragt, kann das Abdichtmittel sehr einfach ausgestaltet sein. Es ist kein zusätzliches Gehäuse erforderlich. Die fluidkühlbare Einzelleitungseinheit kann daher auch im Bereich des Anschlusselements sehr kompakt und robust gestaltet werden.

In einer weiteren bevorzugten Ausführungsform der fluidkühlbaren Einzelleitungseinheit ist an dem zweiten Ende der Einzelleitung ein zweites erfinderisches Anschlusselement angeordnet, wobei das zweite Anschlusselement vorzugsweise ein Mittel für den elektrischen Anschluss der Einzelleitung an eine elektrische Ladestation umfasst, wobei die Ladestation vorzugsweise eine Ladestation für Elektrofahrzeuge ist. Bevorzugterweise ist das Mittel für den elektrischen Anschluss dafür vorgesehen, die fluidkühlbare Einzelleitung an einen Stromanschluss und/oder an ein Klemmen- oder Stecksystem der elektrischen Ladestation anzuschliessen. Der Stromanschluss umfasst beispielsweise eine Stromschiene.

Ein Mittel für den elektrischen Anschluss an die Ladestation kann beispielsweise ein Kontaktteil in der Form eines Steckerpins oder einer Steckerbuchse sein. Es kann jedoch auch ein Befestigungselement sein, wie beispielsweise ein Schraubengewinde, eine Bohrung oder ein kabelschuhförmiges Anschlusselement.

Ein erfinderisches Ladekabel mit Ladesteckverbinder, umfasst eine erste und eine zweite erfinderische fluidkühlbare Einzelleitungseinheit sowie einen gemeinsamen Schutzmantel, wobei der Ladesteckverbinder ein Ladesteckergehäuse, vorzugsweise ein Ladesteckergehäuse nach IEC 62196-3 umfasst. Vorzugsweise ist das Ladekabel ein DC-Ladekabel, bei welchem zwei DC Anschlusspins des Ladesteckverbinders durch die ersten Anschlusselemente der zwei Einzelleitungen realisiert sind.

In einer bevorzugten Ausführungsform umfasst das Ladekabel mindestens einen Schlauch aus einem fluiddichten Material, der von dem gemeinsamen Schutzmantel umgeben ist, und der mit mindestens einem der externen I<ühlanschlüsse der beiden ersten Anschlusselemente verbunden ist, wobei ein durch einen der zentralen Kanäle der beiden fluidkühlbaren Einzelleitungseinheiten geführtes Kühlfluid in die entgegengesetzte Richtung durch den mindestens einen Schlauch zurückgeführt werden kann.

Besonders bevorzugt umfasst das Ladekabel zwei Schläuche, die jeweils mit einem der externen I<ühlanschlüsse der beiden ersten Anschlusselemente verbunden sind, wobei ein durch die zentralen Kanäle der beiden fluidkühlbaren Einzelleitungseinheiten geführtes Kühlfluid in die entgegengesetzte Richtung durch die zwei Schläuche zurückgeführt werden kann.

Ein solches Ladekabel lässt sich mittels der erfindungsgemässen Anschlusselemente besonders einfach herstellen und ermöglicht eine kompakte Bauweise.

Ein erfindungsgemässes Verfahren zur Herstellung einer erfinderischen fluidkühlbaren Einzelleitungseinheit umfasst folgende Schritte:
a) Bereitstellen einer Einzelleitung, welche eine konzentrische Leiteranordnung und eine Isolierung umfasst, wobei in der Einzelleitung mindestens ein zentraler Kanal für ein Kühlfluid vorhanden ist, der von der Leiteranordnung umhüllt wird und wobei die Isolierung die Leiteranordnung unmittelbar umhüllt und für das Kühlfluid undurchdringbar und elektrisch isolierend ist,
b) Bereitstellen eines erfinderischen Anschlusselements,
c) Abisolieren der Einzelleitung an einem ersten Ende, so dass das erste Ende ein erstes abisoliertes Endstück aufweist, an welchem die Isolierung gegenüber der Leiteranordnung axial zurückversetzt ist,
d) Einführen, insbesondere Eindrehen des Gegendruckelements in den zentralen Kanal der Einzelleitung,
e) Aufschieben des hülsenförmigen Pressabschnitts des Anschlusselements auf das erste abisolierte Endstück,
f) wobei das Gegendruckelement so weit in die Leiteranordnung eingeführt wird, dass nach dem Aufschieben des hülsenförmigen Pressabschnitts die Leiteranordnung und der hülsenförmige Pressabschnitt mindestens in einem Teilabschnitt das Gegendruckelement komplett umhüllen, und
g) Herstellen einer radialen Pressverbindung zwischen dem Pressabschnitt und der Leiteranordnung mittels eines Presswerkzeugs im Bereich des Teilabschnitts , so dass das Gegendruckelement die Leiteranordnung während des Anpressvorgangs nach innen abstützt.

In einer weiteren Ausführungsform des Verfahrens umfasst die Einzelleitung ferner eine Stützstruktur mit einer Längsausdehnung, wobei die Stützstruktur im zentralen Kanal angeordnet ist und von der Leiteranordnung entlang der Längsausdehnung unmittelbar umhüllt wird. Entsprechend dieser Ausführungsform des Verfahrens wird beim Einführen des Gegendruckelements ein gegebenenfalls vorhandener Längsabschnitt der Stützstruktur in Längsrichtung zurückgeschoben.

In einer weiteren Ausführungsform des Verfahrens ist das Anschlusselement ein Anschlusselement, bei welchem das Gegendruckelement am Gehäuse angeordnet und/oder ein Gegendruckelement, welches einstückig mit dem Gehäuse ausgebildet ist, Bei dieser Ausführungsform des Verfahrens erfolgt das Aufschieben des hülsenförmigen Pressabschnitts des Anschlusselements und das Einführen des Gegendruckelements gleichzeitig.

Ein solches Verfahren ist sehr effizient durchzuführen, da der separate Arbeitsschritt des Einführen des Gegendruckelements in den zentralen Kanal entfällt.

Weiter ist ein Verfahren bevorzugt, bei welchen das Verpressen mit einem Presswerkzeug erfolgt, welches eine zweiteilige Sechskantmatrize aufweist. Das Sechskantpressen ermöglicht, eine robuste Pressverbindung bereitzustellen. Jedoch sind auch andere Pressverbindungen durch eine Pressmatrize möglich, wie beispielsweise eine Drei-, Vier-, oder Fünfkant- bzw. Rund- oder Oval-Pressverbindung. Das Verpressen kann unter anderem auch durch eine I<ugelpressung und eine Induktionspressung erfolgen.

Besonders bevorzugt erfolgt das Verpressen an zwei unterschiedlichen axial zur Presshülse verschobenen Positionen. Durch das Verpressen an zwei axial zueinander verschobenen Positionen wird der elektrische Verbindungswiderstand verringert und auch die mechanische Robustheit und Zuverlässigkeit der Pressverbindung erhöht. Es ist jedoch auch möglich, den elektrischen Verbindungswiderstand über eine längere Pressstelle zu reduzieren. Bevorzugt erfolgt das Verpressen der zwei axial zueinander verschobenen Positionen sequentiell.

Das Verpressen erfolgt vorzugsweise mit hydraulischen Presswerkzeugen. Die Presskräfte betragen beispielsweise zwischen 3-10 kN, vorzugsweise zwischen 5-6 kN.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine perspektivische Ansicht eines Anschlusselements mit einem Kontaktteil und eines separaten Gegendruckelements;
- Fig. 1b: eine Schnittansicht des Gehäuses des Anschlusselement gemäss Fig. 1a;
- Fig. 1c: eine Schnittansicht des Gegendruckelements gemäss Fig. 1a;
- Fig. 1d: eine Schnittansicht des Kontaktteils gemäss Fig. 1a;
- Fig. 2a: ein Ausschnitt eines Axialschnitts einer ersten Ausführungsform der erfinderischen fluidkühlbaren Einzelleitungseinheit, welche ein Anschlusselement gemäss den Figuren 1a-1d umfasst;
- Fig. 2b: ein Querschnitt durch die Einzelleitung der fluidkühlbaren Einzelleitungseinheit gemäss Fig. 2b;
- Fig. 2c: Verteilung des Kühlfluids in Einzelleitung von Fig. 2b;
- Fig. 3: ein Ausschnitt eines Axialschnitts einer zweiten Ausführungsform der erfinderischen fluidkühlbare Einzelleitungseinheit;
- Fig. 4: ein Ausschnitt eines Axialschnitts einer dritten Ausführungsform der erfinderischen fluidkühlbare Einzelleitungseinheit;
- Fig. 5: eine Schrägansicht eines Ladesteckverbinders eines erfinderischen DC Ladekabels;
- Fig. 6: ein Querschnitt durch ein Ladekabel mit zwei Einzelleitungen, einem Neutralleiter, acht Signalleitungen, zwei Schläuchen und
- Fig. 7: eine schematische Ansicht eines DC-Ladekabels mit zwei fluidkühlbaren Einzelleitungseinheiten und einem Ladesteckverbinder.

Grundsätzlich sind in den Figuren gleiche Teile mit gleichen Bezugszeichen versehen.

### Wege zur Ausführung der Erfindung

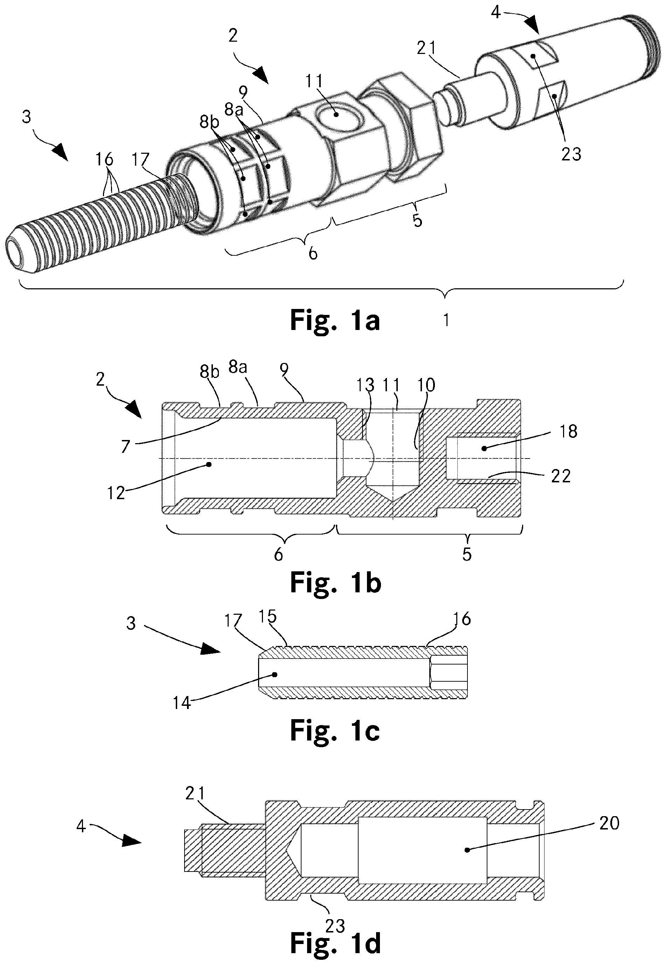

Die Figuren 1a-d zeigen eine erste Ausführungsform des erfinderischen Anschlusselements 1 zum Anschliessen einer Einzelleitung mit einer konzentrischen Leiteranordnung und einem zentralen Kanal für ein Kühlfluid. Das Anschlusselement 1 umfasst ein elektrisch leitfähiges Gehäuse 2, ein Gegendruckelement 3 und ein Kontaktteil 4. Fig. 1a zeigt eine perspektivische Darstellung der verschiedenen nicht montierten Einzelkomponenten. Die einzelnen Teile des Anschlusselements sind jeweils im Axialschnitt in den Figuren 1b-1d dargestellt: Das elektrisch leitfähige Gehäuse 2 ist in Fig 1b, das Gegendruckelement in Fig. 1c und der Kontaktteil in Fig. 1d dargestellt.

Das elektrisch leitfähige Gehäuse 2 hat eine im Wesentlichen zylindrische Form und ist vorzugsweise aus Kupfer oder einer Kupferlegierung hergestellt. In axialer Verlängerung zu einem Hauptabschnitt 5 umfasst es einen hülsenförmigen Pressabschnitt 6. Im Rahmen dieser Anmeldung wird dieser hülsenförmige Pressabschnitt auch als Presshülse bezeichnet. Diese weist vor dem Verpressen eine im Wesentlichen konstante Wandstärke auf, beispielsweise 2.5 mm Wandstärke. Lediglich gegen das offene Ende ist die Wandstärke des Pressabschnitts an seiner Innenmantelfläche 7 nach aussen verjüngt, wodurch das Einführen der konzentrischen Leiteranordnung der zu verbindenden Einzelleitung vereinfacht wird. Zusätzlich kann durch den grösseren Innendurchmesser in diesem Bereich die Isolation des zu verbindenden Einzelleiters teilweise aufgenommen werden, womit die Abdichtung der Einzelleitung nach aussen vereinfacht wird. Die Figuren 1a und 1b zeigen die Form des Gehäuses 2 nach dem Verpressen. Daher sind auch die (stark vereinfacht dargestellten) Presseindrücke 8a und 8b am Aussenmantel 9 des Pressabschnitts dargestellt, welche durch den Verpressvorgang in zwei unterschiedlichen axialen Positionen entstehen. Die insgesamt sechs radial am Aussenmantel 9 angeordneten Presseindrücke 8a resultieren aus einem ersten Pressvorgang mit einem zweiteiligen Sechskant-Presswerkzeug, die sechs weiteren radial am Aussenmantel 9 angeordneten Presseindrücke 8b aus einem zweiten Pressvorgang. In Fig. 1a sind jeweils nur drei der insgesamt sechs Presseindrücke 8a, 8b sichtbar. Das elektrische Gehäuse 2 umfasst einen internen Kühlkanal 10 mit einer radial im Hauptabschnitt 5 des zylindrischen Gehäuses 6 angeordneten Anschlussöffnung 11. Die Anschlussöffnung 11 ist damit zur Presshülsenachse bzw. zur Anschlussrichtung der Einzelleitung senkrecht angeordnet. Der interne Kühlkanal 10 mündet axial und zentrisch in den von dem hülsenförmigen Pressabschnitt 6 umschlossenen Raum 12. Die Anschlussöffnung 11 weist ein Innengewinde 13 auf, an welchem ein Schlauchanschlusselement montiert bzw. aufgeschraubt werden kann.

Das Gegendruckelement 3 hat eine im Wesentlichen hohlzylindrische Form. Sie ist aus einem Gewindestift aus rostfreien Stahl hergestellt. Der Innendurchmesser der zentralen Durchgangsöffnung 14 des Gegendruckelements 3 beträgt beispielsweise etwa 5 mm und die Wandstärke des Hohlzylinders beispielsweise etwa 2 mm. Die Masse sind so zu wählen, dass eine ausreichende Druckbeständigkeit beim Verpressen gewährleistet ist und die zentrale Durchgangsöffnung auch nach dem Verpressen offengehalten wird. Am Aussenmantel 15 besitzt das Gegendruckelement eine Struktur, welche durch eine schraubenlinienförmig ausgebildete Rille 16 im Aussenmantel 15 gebildet wird. Am vorderen Ende weist der Aussenmantel 15 des Gegendruckelements 3 eine Fase 17 auf, welche das Einführen des Gegendruckelements 3 in die konzentrische Leiteranordnung der Einzelleitung vereinfacht.

Der Kontaktteil 4 ist aus einer kupferhaltigen Legierung hergestellt. Er kann aber auch aus anderen elektrisch gut leitfähigen Materialien hergestellt sein, insbesondere aus elektrisch gut leitfähigen Legierungen. Der Kontaktteil dieses Ausführungsbeispiels ist silberbeschichtet. Es eignen sich aber auch andere verschleissfeste, gut leitfähige Verbindungen, wie Gold- und Nickelplatinbeschichtungen. Der Kontaktteil bildet eine weibliche Buchse 20, zur Paarung mit einem stiftförmigen Kontakt. An dem der Buchse 20 gegenüberliegenden Ende umfasst der Kontaktteil einen Gewindebolzen mit einem Aussengewinde 21. Dieser ist für die Verschraubung mit dem Hauptabschnitt 5 des Gehäuses 2 vorgesehen. Dazu umfasst der Hauptabschnitt auf der von dem Pressabschnitt 6 abgewandten Seite eine Sacklochbohrung 18 mit einem Innengewinde 22. Zur Sicherung der Schraubverbindung wird zwischen dem Gehäuse 2 und dem Kontaktteil 4 ein Federring (nicht dargestellt) als Schraubensicherung verwendet. Ein am Kontaktteil angeordnetes Vierkantprofil 23 ermöglicht das Anschrauben des Kontaktteils 4 mit einem Doppelmaulschlüssel. Zur Verdrehsicherung des Gehäuses 2 in einem (in Fig. 1a nicht dargestellten) Steckverbindergehäuse weist das Gehäuse 2 ein Sechskantprofil auf, welches mit einer entsprechenden Sechskantaussparung des Steckverbindergehäuses gepaart werden kann.

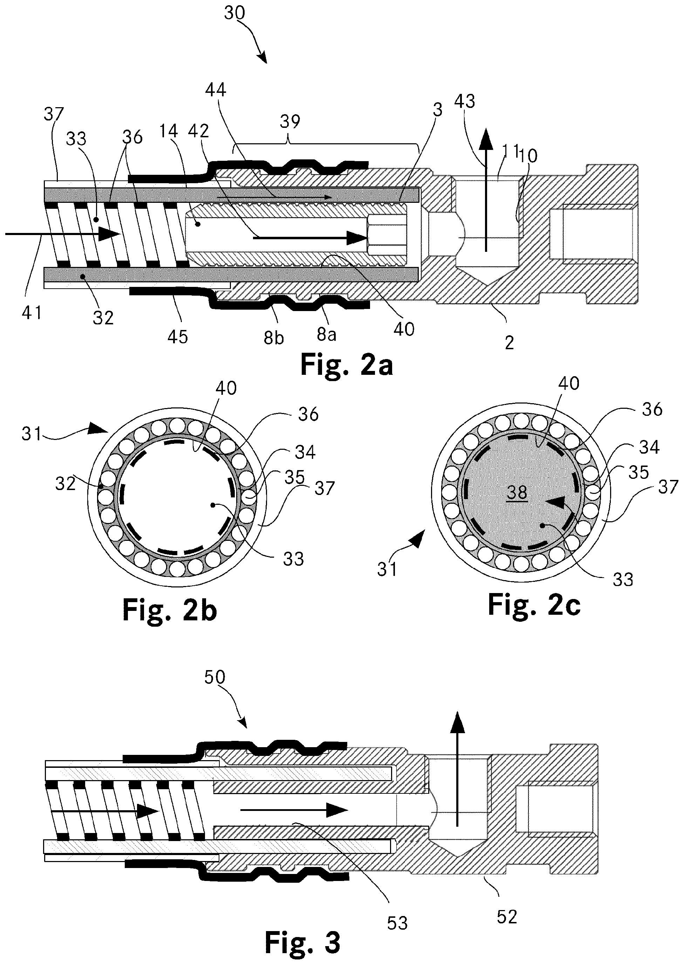

Die Figuren 2a-c zeigen eine erste Ausführungsform der erfinderischen fluidkühlbaren Einzelleitungseinheit 30. In Fig. 2a ist ein Ausschnitt fluidkühlbaren Einzelleitungseinheit 30 dargestellt. Diese Ausführungsform der fluidkühlbaren Einzelleitungseinheit 30 umfasst ein Anschlusselement 1, wie es in den Figuren. 1a-1d dargestellt ist, sowie eine Einzelleitung 31 mit einer konzentrischen Leiteranordnung 32 und einem zentralen Kanal 33.

In Fig. 2a ist jedoch der Kontaktteil 4 des Anschlusselements 1 nicht dargestellt, sondern nur die I<omponenten, welche für die Verbindung der Einzelleitung unmittelbar benötigt werden, nämlich das elektrisch leitfähige Gehäuse 2 mit dem hülsenförmigen Pressabschnitt 6 sowie das Gegendruckelement 3. Die Teilansicht 2a zeigt ferner ein abisoliertes Ende der fluidkühlbaren Einzelleitung 31 im Längsschnitt.

In Fig. 2b ist schematisch ein Querschnitt der Einzelleitung 31 für einen Bereich gezeigt, in welchem die Einzelleitung 31 nicht abisoliert ist. In Fig. 2b ist der Bereich, in welchem die Leiteranordnung 32 angeordnet ist, grau hinterlegt. Sie umfasst ein Leitergeflecht 34 (nur sichtbar in Figuren 2b und 2c, nicht aber in Fig. 2a) und auf dem Leitergeflecht 34 angeordnete verseilte Leiter 35 (ebenfalls nur sichtbar in Figuren 2b und 2c, nicht in Fig. 2a). Im zentralen Kanal 33, welcher von der Leiteranordnung bzw. vom Leitergeflecht 34 umhüllt wird, ist eine Helix 36 als Stützstruktur angeordnet, wobei dabei das Leitergeflecht 34 die Helix 36 unmittelbar umhüllt. Die verseilten Leiter 35 liegen auf dem Leitergeflecht 34 auf. Das Leitergeflecht 34 und die verseilten Leiter 35 sind in elektrischen Kontakt zueinander und leiten gemeinsam den Strom, der durch die Einzelleitung 31 fliesst. Die verseilten Leiter 35 sind unmittelbar von einer Isolierung 37 umhüllt. Der zentrale Kanal 33, in welchem sich auch die Helix 36 befindet, wird durch das Leitergeflecht 34 begrenzt.

Diese Begrenzung ist allerdings nicht kühlfluiddicht, so dass sich das Kühlfluid 38 in radialer Richtung bis zur Isolierung 37 hin ausbreiten kann. Figur 2c zeigt die Verteilung des Kühlfluids 38 in der Einzelleitung 31. Das Kühlfluid 38 ist in grau dargestellt. Es verteilt sich ausgehend vom Kanal 33 durch das Leitergeflecht 34 zwischen die verseilten Leiter 35 bis zur Isolierung 37. Die Isolierung 37 ist fluiddicht. Das Leitergeflecht 34 besteht aus vielen Leiterdrähten und lässt Freiräume zwischen zumindest einem Teil dieser Leiter. Die verseilten Leiter 35 selbst sind in der Regel fluidundurchlässig, aber in den Freiräumen verteilt sich das Fluid. Schliesslich erreicht es die gezeigte Verteilung, in der im Wesentlichen alle verseilten Leiter 35 über einen Grossteil ihrer Oberfläche mit den Fluid in Kontakt sind und somit eine sehr gute Kühlung erreicht wird.

Wie aus Fig. 2a ersichtlich, ist am abisolierten Ende 39 der Einzelleitung die Isolierung 37 gegenüber der Leiteranordnung 32 zurückversetzt. Im Bereich dieses abisolierten Endes 39 ist das Gegendruckelement 3 innerhalb des zentralen Kanal 33 angeordnet. Der abisolierte Abschnitt 39 der Leiteranordnung 32 ist im vom hülsenförmigen Pressabschnitt 6 umschlossen Raum 12 angeordnet (siehe Fig. 1a). Dabei ist das Gegendruckelement 3 so im zentralen Kanal 33 so angeordnet, dass es grösstenteils im vom hülsenförmigen Pressabschnitt 6 umschlossenen Raum 12 liegt. Dabei stützt das Gegendruckelement 3 die konzentrische Leiteranordnung 32 auf ihrer Innenseite 40 im axialen Bereich ab, in welchem die Leiteranordnung 32 in einer Pressverbindung mit dem Pressabschnitt 6 steht. Die Innenseite 40 der konzentrischen Leiteranordnung 32 wird in diesem Ausführungsbeispiel durch die Innenmantelfläche des Leitergeflecht 34 gebildet, welches in den Figuren 2b und 2c, nicht aber Fig. 2a dargestellt ist. Der besagte axiale Bereich ist der Bereich, in welchem eine Verpressung des Presshülsenabschnitts 6 mit der konzentrischen Leiteranordnung 32 durch zwei Pressvorgänge in verschiedenen axial zueinander verschobenen Positionen durchgeführt wurde. Die axialen Presseindrücke 8a, 8b sind in Fig. 2a schematisch dargestellt. Beim Einführen des Gegendruckelements 3 wurde die Helix 36 in Richtung des gegenüberliegenden (nicht dargestellten) Endes der Einzelleitung so zusammengestaucht, dass die Helix 36 zwischen dem Gegendruckelement 3 und dem gegenüberliegenden Ende der Einzelleitung 31 liegt.

In Fig. 2a ist eine mögliche Flussrichtung des Kühlfluids durch die Pfeile 41 - 43 dargestellt. Im dargestellten Fall fliesst das Kühlfluid von dem nicht gezeigten, dem Anschlusslement 1 gegenüberliegenden Einzelleitungsende durch den zentralen Kanal 33 der Einzelleitung 31 und durch die Durchgangsöffnung 14 des Gegendruckelements in den internen Kühlkanal 10 des Anschlusselements und von dort zur Anschlussöffnung 11. Obwohl durch das Verpressen die Leiteranordnung 32 im abisolierten Bereich 39 komprimiert ist, kann die Leiteranordnung 32 dort, je nach I<omprimierungsgrad, noch eine Fluiddurchlässigkeit aufweisen. Ebenfalls erfolgt unmittelbar am äusseren Rand des Pressabschnitts keine nennenswerte Komprimierung. Deshalb könnte Flüssigkeit zwischen der Isolation 37 und dem Pressabschnitt 6 ohne Gegenmassnahme nach Aussen entweichen. Es kann, je nach I<omprimierungsgrad, auch eine kleine Flüssigkeitsmenge durch die Leiteranordnung 32 an dem Gegendruckelement 3 verbeifliessen, wie es durch den Pfeil 44 angedeutet ist. Der Abdichtschlauch 45 dient als Abdichtmittel, um ein ungewolltes Entweichen des Kühlfluids 38 durch den Spalt zwischen der Isolierung und dem Pressabschnitt 6 zu verhindern. Als Abdichtschlauch 45 eignet sich insbesondere ein Schrumpfschlauch. Zusätzlich zum Abdichtschlauch werden vorteilhafterweise noch ein Dichtungsklebeband und Silikon zur Abdichtung verwendet. Es könnten jedoch auch andere Abdichtmittel verwendet werden, wie beispielsweise ein Dichtring oder ein mit Briden befestigter Schlauch. Die mit den Pfeilen angedeutete 41 - 44 Flussrichtung kann selbstverständlich auch umgekehrt werden.

Fig. 3 zeigt eine zweite Ausführungsform der erfinderischen fluidkühlbaren Einzelleitungseinheit 50. Sie zeigt einen Ausschnitt eines axialen Schnittes durch die fluidkühlbaren Einzelleitungseinheit 50. Diese Ausführungsform entspricht der ersten Ausführungsform der Einzelleitungseinheit 30 weitgehend. Im Unterschied zur ersten Ausführungsform ist bei dieser Ausführungsform das Gegendruckelement 53 einstückig mit dem elektrisch leitfähigen Gehäuse 52 ausgebildet. Es ist auch möglich, ein separates Gegendruckelement 53 bereitzustellen und dieses am Gehäuse 52 anzuordnen. Ein separates Gegendruckelement ermöglicht die Verwendung eines anderen Materials, insbesondere eines Materials mit einer höheren Festigkeit und/oder Steifigkeit. Das ermöglicht es beispielsweise, den Durchmesser der Durchgangsöffnung des Gegendruckelements grösser zu wählen und somit eine höhere Durchflussrate zu erzielen.

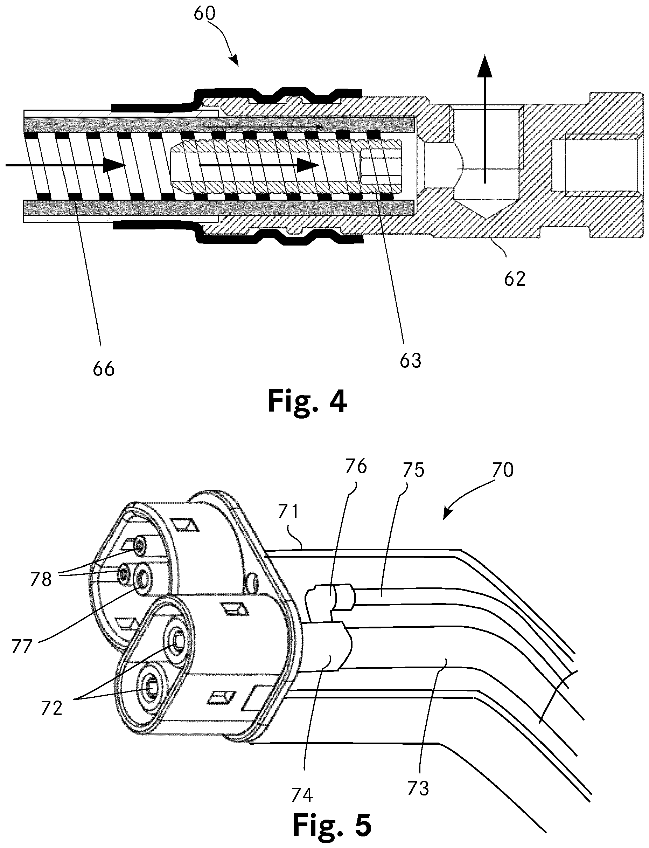

Fig. 4 ist eine schematische Teilansicht eines axialen Schnittes durch eine dritte Ausführungsform der erfinderischen fluidkühlbaren Einzelleitungseinheit 60. Diese Ausführungsform entspricht der ersten Ausführungsform der fluidkühlbaren Einzelleitungseinheit 30 weitgehend. Im Unterschied zur ersten Ausführungsform umgibt bei dieser Ausführungsform die Helix 66 das Gegendruckelement 63. Das Gegendruckelement ist also so ausgebildet, dass es parallel zur offenen Stützstruktur in den zentralen Kanal geschoben werden kann. Im Falle der Helix 66 und des hohlzylindrischen Gegendruckelement 63 ist also der Aussendurchmesser des Gegendruckelements so ausgewählt, dass es in die Helix geschoben werden kann. Auch in diesem Fall kann das Gegendruckelement einstückig mit dem Gehäuse 62 ausgebildet sein, ebenso ist es in diesem Fall auch möglich, das separate Gegendruckelement 63 am Gehäuse 62 anzuordnen.

Fig. 5 - 7 zeigen verschiedene Ansichten eines DC-Ladekabels.

In Fig. 5 ist der Ladesteckverbinder 70 in einer Schrägansicht dargestellt. Es umfasst ein IEC 62196-3 genormtes Ladesteckergehäuse 71, von welchem hier nur eine Hälfte dargestellt ist. Der Ladesteckverbinder 70 weist einen ersten und einen zweiten DC-Steckkontakt 72,72' auf, welche jeweils durch Kontaktteile der erfinderischen Anschlusselemente gebildet werden und durch diese an fluidgekühlte Einzelleitungen angeschlossen sind. In diesem Beispiel ist nur die erste Einzelleitung 73 mit einem ersten Anschlusselement 74 gezeigt. Die Rückführung der I<ühlflüssigkeit erfolgt mittels des I<ühlschlauchs 75, welcher über einen Fluidstutzen 76 an der Anschlussöffnung des Anschlusselements 74 angeschlossen ist. Der Ladesteckverbinder umfasst auch noch einen Neutralleiterpin 77 sowie zwei einen ersten und einen zweiten Signalpin 78,78`.

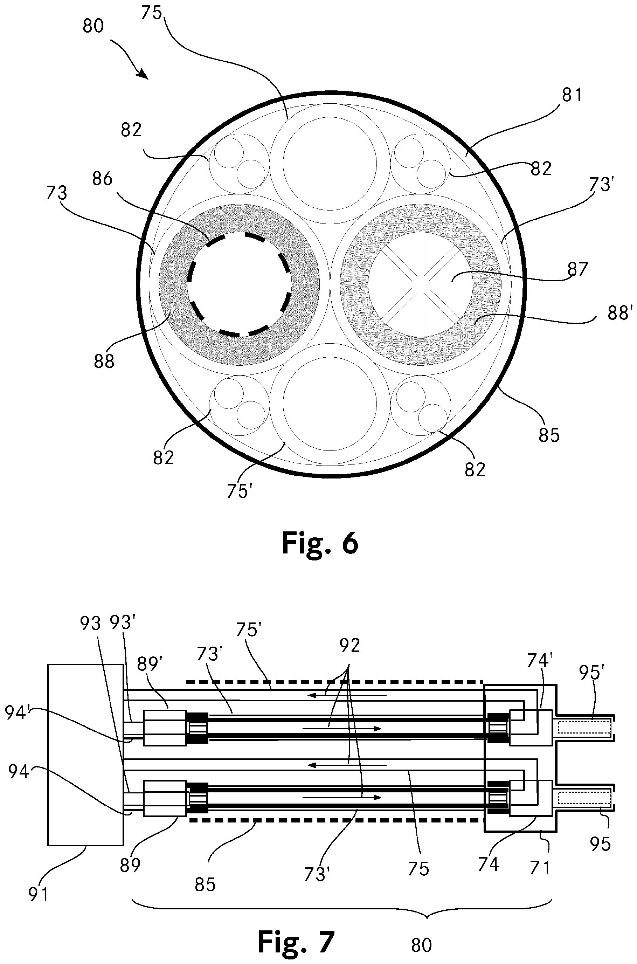

Ein Querschnitt durch das DC-Ladekabel 80 ist in Fig. 6 dargestellt. Dieses umfasst die erste und eine zweite Einzelleitung 73, 73`, den Neutralleiter 81, acht Signalleitungen, welche jeweils paarweise in den vier Hüllen 82 zusammengefasst sind und zwei I<ühlschläuche 75,75`. Die I<ühlschläuche sind aus einem biegsamen, hitzebeständigen und fluiddichten Material und haben einen runden Querschnitt. Je nach Anwendung und vor allem nach verwendeten Kühlfluid eignen sich beispielsweise Polyurethan, Polyethylen, Silikon, Polyvinyl und Polyamid. Die Signalleitungen sind durch ein Aluminium/Polyester-Band abgeschirmt. Es können jedoch auch andere Abschirmbänder verwendet werden. Der Neutralleiter 81 ist als Schirmgeflecht ausgeführt und umhüllt sämtliche oben erwähnte Leitungen und Schläuche: die Einzelleitungen 73,73`, die Hüllen 82 mit den Signalleitungen und die I<ühlschläuche 75,75`. All dies ist von einem gemeinsamen Schutzmantel 85 umgeben. Es fasst Einzelleitungen 73,73`, den Neutralleiter 81 und die Signalleitungen innerhalb eines gemeinsamen Schutzmantels 85 zusammen und verbindet den Ladesteckverbinder 70 mit der Ladestation. Der Schutzmantel 85 hat die Form eines runden Hohlzylinders mit einem Innendurchmesser, der sich aus dem Doppelten eines Einzelleitungs-Durchmessers sowie der doppelten Dicke des Schirmgeflechts des Neutralleiters 81 ergibt. Die erste und zweite Einzelleitung 73, 73' haben beide einen runden Querschnitt und den gleichen Durchmesser. Die erste Einzelleitung 73 nutzt eine Helix 86, die zweite Einzelleitung 73' ein offenes sternförmiges Profil 87als Stützstruktur. Die unterschiedlichen Stützstrukturen sind hier nur zur Veranschaulichung der möglichen Verwendung unterschiedlicher Stützstrukturen dargestellt. Vorteilhafterweise weisen beide Einzelleitungen jedoch eine gleiche Stützstruktur auf. Beide Einzelleitungen weisen eine Leiteranordnung 88, 88' auf, die zwei konzentrisch zueinander angeordnete Leitergeflechtschichten umfasst.

Die erste und die zweite Einzelleitung 73,73' sind nebeneinander angeordnet und berühren sich. Die zwei I<ühlschläuche 75,75`, die das Kühlfluid der Einzelleitungen 73,73' zurückführen, sind jeweils so angeordnet, dass sie in Kontakt mit einer der Einzelleitungen 73 und 73' und dem Neutralleiter 81 sind. So ergibt sich eine kompakte Anordnung aller Bestandteile des DC-Ladekabels 80 und der beiden Einzelleitungen 73,73`. Zudem gibt es bei dieser Anordnung gleich acht Berührungspunkte welche die Isolation 85 abstützen.

Das DC-Ladekabel hat bei einem Aussendurchmesser von 31 mm einen Leiterquerschnitt 35 mm² und ist ausgelegt, dass es bei einer Kühlung mit 20°C warmen Wasser und einer Durchflussrate von 1.8 l/min einen Dauergleichstrom von 700 A über 7 m übertragen kann, ohne dass die Oberflächentemperatur des DC-Ladekabels heisser als 50° wird.

Fig 7 zeigt schematisch das an eine DC Ladestation 91 angeschlossene Ladekabel gemäss dem in den Figuren 5 und 6 dargestellten Ausführungsbeispiel. In der stark vereinfachten Darstellung sind die Signalleitungen und der Neutralleiter sowie die Pins nicht dargestellt.

Von den acht Signalleitungen sind zwei mit den Signalpins 78 (Fig. 5) verbunden. Die übrigen Signalleitungen können unter anderem für Feuchtigkeits- und Temperatursensoren im Ladestecker verwendet werden.

Die beiden Einzelleitungen 73, 73' umfassen an ihren beiden Enden jeweils ein erstes Anschlusselement 74,74` und ein zweites Anschlusselement 89,89`. Die ersten Anschlusselemente 74, 74' sind im Ladesteckergehäuse 71 angeordnet. Beide Anschlusselemente weisen ein jeweils ein Kontaktteil 95, 95' mit einer weiblichen Buchse auf. Beiden Anschlusselemente wird das von der DC Ladestation heruntergekühlte Kühlfluid über den zentralen Kanal der jeweiligen Einzelleitung 73. 73' zugeführt. Die Zurückführung erfolgt über den an den jeweils an der Anschlussöffnung des ersten Anschlusselements 74, 74' angeschlossen Kühlschlauch 75,75`.

Die Einzelleitungen 73,73' sind jeweils über ein zweites Anschlusselement 89, 89' an die DC-Ladestation 91 angeschlossen. Das gekühlte Kühlfluid wird jeweils über eine Fluidausgangsleitung 93, 93' und der jeweiligen Anschlussöffnung des zweiten Anschlusselements 89, 89' dem zentralen Kanal der jeweiligen Einzelleitung 73, 73' zugeführt. In diesem Ausführungsbeispiel ist die Anschlussöffnung axial bzw. parallel zum Pressabschnitt des jeweiligen zweiten Anschlusselements 89,89' ausgeführt. Das zweite Anschlusselement 89, 89' weist jeweils ein Mittel für den elektrischen Anschluss der jeweiligen Einzelleitung 73, 73' an einen der beiden Stromanschlüsse 94, 94' der elektrischen Ladestation auf, beispielsweise an eine Stromschiene.

Zusammenfassend ist festzustellen, dass ein Anschlusselement geschaffen wurde, welches eine mechanisch robuste und gleichzeitig kostengünstige Verbindung mit einem fluidgekühlten Leiter ermöglicht, welcher einen zentralen Fluidkanal aufweist, der von einem konzentrischen Leiter umgeben ist. Die Anschlusselemente eignen sich sowohl für den Anschluss des Ladesteckverbinders an die Einzelleitungen sowie für den Anschluss der Einzelleitungen an eine Ladestation. Dadurch werden fluidkühlbare DC-Ladekabel robuster und gleichzeitig kostengünstiger.

## Patentansprüche

1. Anschlusselement (1) zum elektrischen Anschliessen einer Einzelleitung, welche eine konzentrische Leiteranordnung und einen zentralen Kanal für ein Kühlfluid aufweist, das Anschlusselement (1) umfassend:
a. ein elektrisch leitfähiges Gehäuse (2); das Anschlusselement **dadurch gekennzeichnet, dass** das Gehäuse
b. weist einen hülsenförmigen Pressabschnitt (6), der sich zur Herstellung einer Pressverbindung mit der konzentrischen Leiteranordnung eignet,
c. wobei das elektrisch leitfähige Gehäuse (2) einen internen I<ühll<anal (10) mit einer Anschlussöffnung (11) für eine externe Kühlleitung aufweist, welcher in einen vom hülsenförmigen Pressabschnitt (6) umschlossenen Raum (12) mündet,
d. wobei das Anschlusselement (1) ferner ein Gegendruckelement (3) umfasst, das mindestens teilweise im vom hülsenförmigen Pressabschnitt (6) umschlossenen Raum (12) liegen kann,
e. wobei das Gegendruckelement (3) ferner dazu konfiguriert ist, eine konzentrische Leiteranordnung auf ihrer Innenseite (40) abzustützen, wenn der hülsenförmige Pressabschnitt (6) beim Herstellen einer Pressverbindung komprimiert wird, und so ausgelegt ist, dass es im verpressten Zustand fluiddurchlässig ist, um eine Fluidverbindung durch das Gegendruckelement (3) zu gewährleisten.

2. Anschlusselement nach einem der Ansprüche 1, wobei das Gegendruckelement (3) im Wesentlichen eine zylindrische Aussenkontur aufweist.

3. Anschlusselement nach Anspruch 2, wobei das Gegendruckelement (3) hohlzylindrisch ist und die Fluidverbindung durch eine zentrale Durchgangsöffnung (14) gewährleistet.

4. Anschlusselement nach Anspruch 2 oder 3, wobei das Gegendruckelement (53) am Gehäuse (52) angeordnet ist.

5. Anschlusselement nach Anspruch 4, wobei das Gegendruckelement (53) einstückig bzw. einteilig mit dem Gehäuse (52) ausgebildet ist.

6. Anschlusselement nach einem der Ansprüche 1 - 5, dessen Gegendruckelement (3) so dimensioniert ist, dass es beim Einführen eine im zentralen Kanal angeordnete Stützstruktur, welche von der Leiteranordnung entlang der Längsausdehnung unmittelbar umhüllt wird, mitverschieben kann.

7. Anschlusselement nach einem der Ansprüche 1 - 5, wobei das Gegendruckelement (3) an seiner Aussenhülle (15) ein Profil (16) aufweist, welches beim Herstellen der Pressverbindung eine formschlüssige Verbindung mit der Leiteranordnung ermöglicht.

8. Anschlusselement nach Anspruch 7, wobei das Gehäuse des Anschlusselements (1) aus Kupfer oder einer I<upferhaltigen Legierung hergestellt ist.

9. Anschlusselement, nach einem der Ansprüche 1 - 8, wobei das Anschlusselement (1) einen I<ontal<tteil (4) umfasst, wobei der I<ontal<tteil (4) vorzugsweise eine weibliche Buchse (20) aufweist, welche für die Verwendung in einem DC Ladesteckverbinders für ein Elektrofahrzeug geeignet ist.

10. Anschlusselement nach Anspruch 9, wobei der I<ontal<tteil (4) mit einer verschleissfesten, elektrisch gut leitfähigen Beschichtung beschichtet ist, wobei die Beschichtung insbesondere eine Silber-, Gold- oder Nickelplatinbeschichtung ist.

11. Anschlusselement nach Anspruch 9 oder 10, wobei der leitende I<ontal<tteil (4) mit dem Gehäuse (2) des Anschlusselements (1) lösbar verbunden ist.

12. Anschlusselement nach Anspruch 11, wobei der leitende I<ontal<tteil (4) über eine Schraubverbindung mit dem Gehäuse verbindbar ist, wobei vorzugsweise das Gehäuse (2) des Anschlusselements ein Innengewinde (22) aufweist, das mit einem Aussengewinde (21) des I<ontal<tteils verschraubt werden kann.

13. Anschlusselement nach einen der Ansprüche 1 - 12, wobei der interne I<ühll<anal (10) axial in den vom hülsenförmigen Pressabschnitt (6) umschlossenen Raum (12) mündet, vorzugsweise zentrisch zur Innenmantelfläche (7) des hülsenförmigen Pressabschnitts (6).

14. Anschlusselement nach einem der Ansprüche 1 - 13, wobei die Anschlussöffnung (11) senkrecht zu einer Anschlussrichtung der Einzelleitung angeordnet ist und vorzugsweise ein Innengewinde (13) aufweist.

15. Fluidl<ühlbare Einzelleitungseinheit (30, 50, 60), für ein Ladekabel , welche
a) ein erstes Anschlusselement (1) gemäss einem der Ansprüche 1 - 14, sowie
b) eine Einzelleitung (31) mit einem ersten und einem zweiten Ende aufweist, die Einzelleitung (31) umfassend:
a. eine konzentrische Leiteranordnung (32),
b. eine Isolierung (37),
i. wobei mindestens ein zentraler Kanal (33) für ein I<ühlfluid vorhanden ist, der von der Leiteranordnung (32) umhüllt wird und
ii. die Isolierung (37) die Leiteranordnung (32) unmittelbar umhüllt und für das Kühlfluid (38) undurchdringbar und elektrisch isolierend ist, und
iii. wobei die Einzelleitung (30, 50, 60) an seinem ersten Ende ein erstes abisoliertes Endstück (39) aufweist, an welchem die Isolierung (37) gegenüber der Leiteranordnung (32) axial zurückversetzt ist,
dabei steht die Innenmantelfläche (7) des Pressabschnitts (6) des ersten Anschlusselements (1) mit der Leiteranordnung (32) am abisolierten Endstück (39) in einer radialen Pressverbindung, wodurch eine elektrische Verbindung zwischen dem Anschlusselement (1) und der konzentrischen Leiteranordnung (32),
wobei ferner
c) ein Gegendruckelement (3, 53, 63) im zentralen I<anal (33) angeordnet ist, so dass es mindestens teilweise im vom hülsenförmigen Pressabschnitt (6) umschlossenen Raum (12) liegt, und die konzentrische Leiteranordnung (32) auf ihrer Innenseite abstützt und dabei in einer Pressverbindung mit der konzentrischen Leiteranordnung (32) steht,
d) wobei das Gegendruckelement (3, 53, 63) eine Fluidverbindung durch den zentralen Kanal (33) der Einzelleitung (31) zwischen dem internen I<ühll<anal (10) des ersten Anschlusselements (1) und dem zweiten Ende der Einzelleitung (31) ermöglicht.

16. Ladekabel mit Ladesteckverbinder (80), umfassend eine erste und eine zweite fluidkühlbare Einzelleitungseinheit (73, 73') nach Anspruch 15, sowie einen gemeinsamen Schutzmantel (85), wobei der Ladesteckverbinder (70) ein Ladesteckergehäuse (71), vorzugsweise ein Ladesteckergehäuse (71) nach IEC 62196-3 umfasst, wobei das Ladekabel vorzugsweise ein DC-Ladel<abel ist, bei welchem zwei DC Anschlusspins (72,72') des Ladesteckverbinders durch die ersten Anschlusselemente (74, 74') der zwei Einzelleitungen (73, 73') realisiert sind.

17. Verfahren zur Herstellung einer fluidl<ühlbaren Einzelleitungseinheit (30, 50, 60) nach Anspruch 15, und wobei das Verfahren folgende Schritte umfasst:
a) Bereitstellen einer Einzelleitung (31), welche eine konzentrische Leiteranordnung (32) und eine Isolierung (37) umfasst, wobei in der Einzelleitung (31) mindestens ein zentraler Kanal (33) für ein Kühlfluid (38) vorhanden ist, der von der Leiteranordnung (32) umhüllt wird und wobei die Isolierung (37) die Leiteranordnung (32) unmittelbar umhüllt und für das Kühlfluid (38) undurchdringbar und elektrisch isolierend ist,
b) Bereitstellen eines Anschlusselements (1) gemäss einem der Ansprüche 1 - 15,
c) Abisolieren der Einzelleitung (31) an einem ersten Ende, so dass das erste Ende ein erstes abisoliertes Endstück (39) aufweist, an welchem die Isolierung (37) gegenüber der Leiteranordnung (32) axial zurückversetzt ist,
d) Einführen, insbesondere Eindrehen des Gegendruckelements (3, 53, 63) in den zentralen Kanal (33) der Einzelleitung (31),
e) Aufschieben des hülsenförmigen Pressabschnitts (6) des Anschlusselements (1) auf das erste abisolierte Endstück (39),
f) wobei das Gegendruckelement so weit in die Leiteranordnung (32) eingeführt wird, dass nach dem Aufschieben des hülsenförmigen Pressabschnitts (6) die Leiteranordnung (32) und der hülsenförmige Pressabschnitt (6) mindestens in einem Teilabschnitt das Gegendruckelement (3, 53, 63) komplett umhüllen, und
g) Herstellen einer radialen Pressverbindung zwischen dem hülsenförmigen Pressabschnitt (6) und der Leiteranordnung (32) mittels eines Presswerkzeugs im Bereich des Teilabschnitts, so dass das Gegendruckelement (3, 53, 63) die Leiteranordnung (32) während des Anpressvorgangs nach innen abstützt.

## Claims

1. Connection element (1) for electrically connecting an individual line which has a concentric conductor arrangement and a central channel for a cooling fluid, the connection element (1) comprising:
a. an electrically conductive housing (2);
the connection element being **characterised in that** the housing
b. has a sleeve-shaped press-fit section (6) which is suitable for establishing a press-fit connection with the concentric conductor arrangement,
c. wherein the electrically conductive housing (2) has an internal cooling channel (10) having a connection opening (11) for an external cooling line, said cooling channel (10) leading into a space (12) surrounded by the sleeve-shaped press-fit section (6),
d. wherein the connection element (1) furthermore comprises a counterpressure element (3), which can lie at least partially in the space (12) surrounded by the sleeve-shaped press-fit section (6),
e. wherein the counterpressure element (3) is furthermore configured to support a concentric conductor arrangement on the inner side (40) thereof, when the sleeve-shaped press-fit section (6) is compressed while establishing a press-fit connection, and is designed to be fluidpermeable in the pressed state in order to ensure a fluid connection through the counterpressure element (3).

2. Connection element according to claim 1,
wherein the counterpressure element (3) substantially has a cylindrical outer contour.

3. Connection element according to claim 2,
wherein the counterpressure element (3) is hollow-cylindrical and ensures the fluid connection through a central through-opening (14).

4. Connection element according to claim 2 or 3,
wherein the counterpressure element (53) is arranged on the housing (52).

5. Connection element according to claim 4,
wherein the counterpressure element (53) is formed in one piece or as a single part with the housing (52).

6. Connection element according to one of claims 1 to 5,
the counterpressure element (3) of which is dimensioned in such a way that, as it is introduced, it can take along a support structure which is arranged in the central channel and which is directly enclosed by the conductor arrangement along the longitudinal extent.

7. Connection element according to one of claims 1 to 5,
wherein the counterpressure element (3) has a profile (16) on its outer casing (15), which profile permits a positive connection to the conductor arrangement while the press-fit connection is established.

8. Connection element according to claim 7,
wherein the housing of the connection element (1) is produced from copper or a copper-containing alloy.

9. Connection element according to one of claims 1 to 8,
wherein the connection element (1) comprises a contact part (4), wherein the contact part (4) preferably has a female socket (20) which is suitable for use in a DC charging plug connector for an electric vehicle.

10. Connection element according to claim 9,
wherein the contact part (4) is coated with a wear-resistant, electrically highly conductive coating, wherein the coating is, in particular, a silver coating, a gold coating or a nickel-platinum coating.

11. Connection element according to claim 9 or 10,
wherein the conductive contact part (4) is detachably connected to the housing (2) of the connection element (1).

12. Connection element according to claim 11,
wherein the conductive contact part (4) can be connected to the housing by means of a screw connection,
wherein the housing (2) of the connection element preferably has an internal thread (22), which can be screwed with an external thread (21) of the contact part.

13. Connection element according to one of claims 1 to 12,
wherein the internal cooling channel (10) opens axially into the space (12) surrounded by the sleeve-shaped press-fit section (6), preferably centrally with respect to the inner circumferential surface (7) of the sleeve-shaped press-fit section (6).

14. Connection element according to one of claims 1 to 13,
wherein the connection opening (11) is arranged perpendicularly to a connection direction of the individual line and preferably has an internal thread (13).

15. Fluid-coolable individual line unit (30, 50, 60) for a charging cable, which has
a) a first connection element (1) according to any of claims 1 - 14, and
b) an individual line (31) having a first and a second end, the individual line (31) comprising:
a. a concentric conductor arrangement (32),
b. an insulation (37),
i. wherein there is at least one central channel (33) for a cooling fluid, which is enclosed by the conductor arrangement (32), and
ii. the insulation (37) directly encloses the conductor arrangement (32) and is impenetrable for the cooling fluid (38) and electrically insulating, and
iii. wherein the individual line (30, 50, 60) has a first stripped end piece (39) at its first end, on which the insulation (37) is axially set back with respect to the conductor arrangement (32),
wherein the inner circumferential surface (7) of the press-fit section (6) of the first connection element (1) is in a radial press-fit connection with the conductor arrangement (32) on the stripped end piece (39), as a result of which an electrical connection between the connection element (1) and the concentric conductor arrangement (32), wherein furthermore
c) a counterpressure element (3, 53, 63) is arranged in the central channel (33) so that it lies at least partially in the space (12) surrounded by the sleeve-shaped press-fit section (6), and supports the concentric conductor arrangement (32) on the inside thereof and, at the same time, is in a press-fit connection with the concentric conductor arrangement (32),
d) wherein the counterpressure element (3, 53, 63) permits a fluid connection through the central channel (33) of the individual line (31) between the internal cooling channel (10) of the first connection element (1) and the second end of the individual line (31).

16. Charging cable with a charging plug connector (80), comprising a first and a second fluid-coolable individual line unit (73, 73') as claimed in claim 15, and
a common protective sheath (85),
wherein the charging plug connector (70) comprises a charging plug housing (71), preferably a charging plug housing (71) according to IEC 62196-3, wherein the charging cable is preferably a DC charging cable in which two DC connection pins (72, 72') of the charging plug connector are implemented by the first connection elements (74, 74`) of the two individual lines (73, 73).

17. Method for producing a fluid-coolable individual line unit (30, 50, 60) as claimed in claim 15,
and wherein the method comprises the following steps:
a) providing an individual line (31), which comprises a concentric conductor arrangement (32) and insulation (37),
wherein there is in the individual line (31) at least one central channel (33) for a cooling fluid (38), which is enclosed by the conductor arrangement (32), and wherein the insulation (37) directly encloses the conductor arrangement (32) and is impenetrable for the cooling fluid (38) and electrically insulating,
b) providing a connection element (1) as claimed in any of claims 1-15,
c) stripping the individual line (31) at a first end, with the result that the first end has a first stripped end piece (39), on which the insulation (37) is axially set back with respect to the conductor arrangement (32),
d) introducing, in particular screwing, the counterpressure element (3, 53, 63) into the central channel (33) of the individual line (31),
e) pushing the sleeve-shaped press-fit section (6) of the connection element (1) onto the first stripped end piece (39),
f) wherein the counterpressure element is introduced into the conductor arrangement (32) to such an extent that, after the sleeve-shaped press-fit section (6) has been pushed on, the conductor arrangement (32) and the sleeve-shaped press-fit section (6) completely enclose the counterpressure element (3, 53, 63), at least in a partial section, and
g) establishing a radial press-fit connection between the sleeve-shaped press-fit section (6) and the conductor arrangement (32) by means of a pressing tool in the region of the partial section, with the result that the counterpressure element (3, 53, 63) supports the conductor arrangement (32) toward the inside during the pressing operation.

## Revendications

1. Pièce de raccordement (1) pour le raccordement électrique d'une ligne seule comprenant un agencement de conducteurs concentrique et un canal central pour un fluide réfrigérant,
la pièce de raccordement (1) comprenant :
a. un boîtier électriquement conductif (2) ; la pièce de raccordement (1) étant **caractérisée en ce que** le boîtier
b. comporte une section de serrage en forme de douille (6), qui est apte pour établir une connexion serrée avec l'agencement de conducteurs concentrique,
c. le boîtier électriquement conductif (2) comprenant un canal de refroidissement interne (10) qui a une ouverture de raccordement (11) pour une ligne de refroidissement externe et qui débouche dans un espace (12) entouré de la section de serrage en forme de douille (6),
d. la pièce de raccordement (1) en outre comprenant un élément de contre-pression (3) qui peut être situé au moins partiellement dans l'espace (12) entouré de la section de serrage en forme de douille (6),
e. où l'élément de contre-pression (3) est en outre configuré pour supporter un agencement de conducteurs concentrique sur sa face intérieure (40) quand la section de serrage en forme de douille (6) est comprimée en établissant une connexion serrée, et est conçu de telle manière qu'il est perméable pour un fluide en état serré pour assurer une connexion fluidique à travers l'élément de contre-pression (3).

2. Pièce de raccordement selon la revendication 1,
où l'élément de contre-pression (3) présente essentiellement un contour extérieur cylindrique.

3. Pièce de raccordement selon la revendication 2,
où l'élément de contre-pression (3) est en forme de cylindre creux et assure la connexion fluidique à travers une ouverture de passage centrale (14).

4. Pièce de raccordement selon la revendication 2 ou 3,
où l'élément de contre-pression (53) est disposé sur le boîtier (52).

5. Pièce de raccordement selon la revendication 4,
où l'élément de contre-pression (53) est réalisé intégralement ou monobloc avec le boîtier (52).

6. Pièce de raccordement selon l'une des revendications 1 à 5,
dont l'élément de contre-pression (3) est dimensionné de telle manière qu'il peut - en étant introduite - emporter et déplacer une structure de support disposée dans le canal central et directement gainée par l'agencement de conducteurs le long de l'étendue longitudinale.

7. Pièce de raccordement selon l'une des revendications 1 à 5,
où l'élément de contre-pression (3) comporte sur sa gaine extérieure (15) un profil (16) permettant - quand la connexion serrée est établie- une liaison par forme avec l'agencement de conducteurs.

8. Pièce de raccordement selon la revendication 7,
où le boîtier de la pièce de raccordement (1) est établi de cuivre ou d'un alliage cuprifère.

9. Pièce de raccordement selon l'une des revendications 1 à 8,
où la pièce de raccordement (1) comprend un élément de contact (4), l'élément de contact (4) ayant de préférence une prise femelle (20) apte pour l'utilisation dans un connecteur de recharge enfichable DC pour un véhicule électrique.

10. Pièce de raccordement selon la revendication 9,
où l'élément de contact (4) est revêtu d'un revêtement qui est résistant à l'usure et est bien conductif électriquement,
le revêtement étant en particulier un revêtement en argent, en or ou en nickelplatine.

11. Pièce de raccordement selon la revendication 9 ou 10,
où l'élément de contact conductif (4) est raccordé de façon amovible au boîtier (2) de la pièce de raccordement (1).

12. Pièce de raccordement selon la revendication 11,
où l'élément de contact conductif (4) est raccordable avec le boîtier par un raccordement vissé, le boîtier (2) de la pièce de raccordement (1) préférablement ayant un filetage intérieur (22) qui peut être vissé avec un filetage extérieur (21) de l'élément de contact.

13. Pièce de raccordement selon l'une des revendications 1 à 12,
où le canal de refroidissement interne (10) débouche axialement dans l'espace (12) entouré de la section de serrage en forme de douille (6), de préférence centriquement par rapport à la surface-gaine intérieure (7) de la section de serrage en forme de douille (6).

14. Pièce de raccordement selon l'une des revendications 1 à 13,
où l'ouverture de raccordement (11) est disposée perpendiculairement à une direction de raccordement de la ligne seule et comprend de préférence un filetage intérieur (13).

15. Unité de ligne seule (30, 50, 60) refroidissable par fluide pour un câble chargeur, comprenant :
a) une première pièce de raccordement (1) selon l'une des revendications 1 à 14 aussi que
b) une ligne seule (31) ayant une première extrémité et une deuxième extrémité, la ligne seule (31) comprenant :
a. un agencement de conducteurs concentrique (32),
b. une isolation (37),
i. où il y a au moins un canal central (33) pour un fluide réfrigérant, qui est gainé par l'agencement de conducteurs (32), et
ii. l'isolation (37) gaine l'agencement de conducteurs (32) directement et est imperméable pour le fluide réfrigérant et électriquement isolant et
iii. où la ligne seule (30, 50, 60) comporte à sa première extrémité un premier embout dénudé (39) auquel l'isolation (37) est axialement décalé en arrière par rapport à l'agencement de conducteurs (32),
la surface-gaine intérieure (7) de la section de serrage (6) de la première pièce de raccordement (1) étant en connexion serrée radiale avec l'agencement de conducteurs (32) dans l'embout dénudé (39), résultant en raccordement électrique entre la pièce de raccordement (1) et l'agencement de conducteurs concentrique (32),
où en outre
c) un élément de contre-pression (3, 53, 63) est disposé dans le canal central (33) en sorte qu'il est situé au moins en partie dans l'espace (12) entouré de la section de serrage en forme de douille (6), ledit élément de contre-pression (3, 53, 63) supportant l'agencement de conducteurs concentrique (32) sur sa face intérieure et étant en connexion serrée avec l'agencement de conducteurs concentrique (32),
d) où l'élément de contre-pression (3, 53, 63) permet une connexion fluidique à travers le canal central (33) de la ligne seule (31) entre le canal de refroidissement interne (10) de la première pièce de raccordement (1) et la deuxième extrémité de la ligne seule (31.

16. Câble chargeur avec connecteur de recharge enfichable (80), comprenant une première et une deuxième unité de ligne seule (73, 73') refroidissable par fluide selon la revendication 15 et
une gaine protective commune (85),
le connecteur de recharge enfichable (70) incluant un boîtier de prise de charge mâle (71) selon IEC 62196-3,
le câble chargeur étant de préférence un câble chargeur DC dans lequel deux broches de connexion DC (72, 72') du connecteur de recharge enfichable sont réalisées par les premières pièces de raccordement (74, 74') des deux lignes seules (73, 73').

17. Procédé pour la production d'une unité de ligne seule (30, 50, 60) refroidissable par fluide selon la revendication 15, let procédé comprenant les étapes suivantes :
a) fournir une ligne seule (31) incluant un agencement de conducteurs concentrique (32) et une isolation (37),
où il y a dans la ligne seule (31) au moins un canal central (33) pour un fluide réfrigérant (38) qui est enveloppé de l'agencement de conducteurs (32) et
où l'isolation (37) enveloppe l'agencement de conducteurs (32) directement et est imperméable pour le fluide réfrigérant (38) et électriquement isolant,
b) fournir une pièce de raccordement (1) selon l'une des revendications 1 à 15,
c) dénuder la ligne seule (31) à une première extrémité, en sorte que la première extrémité a un premier embout dénudé (39) auquel l'isolation (37) est axialement décalé en arrière par rapport à l'agencement de conducteurs (32),
d) introduire, en particulier visser, l'élément de contre-pression (3, 53, 63) dans le canal central (33) de la ligne seule (31),
e) pousser la section de serrage en forme de douille (6) de la pièce de raccordement (1) sur le premier embout dénudé (39),
f) où l'élément de contre-pression est introduit dans l'agencement de conducteurs (32) jusqu'à ce que, suivant le poussage de la section de serrage en forme de douille (6), l'agencement de conducteurs (32) et la section de serrage en forme de douille (6) enveloppent l'élément de contre-pression (3, 53, 63) complètement au moins dans une sub-section, et
g) établir une connexion serrée radiale entre la section de serrage en forme de douille (6) et l'agencement de conducteurs (32) moyennant un outil de serrage dans la zone de la sub-section, en sorte que l'élément de contre-pression (3, 53, 63) supporte l'agencement de conducteurs (32) vers l'intérieur pendant le procès de serrage.
